# EUROPÄISCHE PATENTANMELDUNG

(11) **EP 1 477 926 A1**
(43) Veröffentlichungstag der Anmeldung: **17.11.2004**
(21) Anmeldenummer: 03010629.8
(22) Anmeldetag: 12.05.2003
(51) Int. Cl.: G06K 13/08

(54) **Kartenleser mit Verriegelung**

(71) Anmelder: ddm hopt + schuler GmbH & Co. KG., 78628 Rottweil (DE)
(72) Erfinder: Hopt, Jürgen, 78628 Rottweil (DE); Franzmann, Mike, Rottweil 78628 (DE)
(74) Vertreter: KOHLER SCHMID + PARTNER

(57) **Zusammenfassung**

Der erfindungsgemäße Kartenleser (1) umfasst eine Verriegelungsklinke (4), die um eine etwa parallel zur Vorder- und Hinterkante (2a, 2b) einer eingeführten Karte (2) verlaufende Achse (5) schwenkbar gelagert und jeweils gegen die Wirkung einer Rückstellkraft aus einer in die Kartenbahn eingreifenden Stellung beim Einführen einer Karte (2) in Einführrichtung (3) auf- und beim Entnehmen der Karte (2) entgegen der Einführrichtung (3) zurückschwenkbar ist, und einen um eine etwa rechtwinklig zur Kartenbahn verlaufende Achse (8) verschwenkbaren Sperrhebel (7), der in seiner in die Bewegungsbahn der Verriegelungsklinke (4) eingreifenden Sperrstellung die in die Kartenbahn eingreifende Verriegelungsklinke (4) gegen Zurückschwenken sperrt und aus der Sperrstellung gegen die Wirkung einer Rückstellkraft in eine Freigabestellung auslenkbar ist, wobei die Verriegelungsklinke (4), gesehen in Aufschwenkrichtung (10), umfangsseitig eine erste Auflauffläche (11), auf welche die Kartenvorderkante (2a) beim Einführen der Karte (2) trifft, eine zweite Auflauffläche (12), auf welche die Kartenhinterkante (2b) beim Entnehmen der Karte (2) trifft, eine Drehanschlagsfläche (13), welche in der Sperrstellung des Sperrhebels (7) an diesem anliegt, sowie eine sich an die Drehanschlagsfläche (13) anschließende seitliche Anlagefläche (14), an welcher der Sperrhebel (7) in seiner Freigabestellung anliegt, aufweist.

## Beschreibung

Die vorliegende Erfindung betrifft einen Kartenleser mit einer Verriegelung für eine eingeführte Karte.

Bei bekannten Kartenlesern wird die eingeführte Karte im Kartenleser mittels eines Schwenkarms verriegelt, um z.B. während des Datenaustausches ein Zurückziehen der eingeführten Karte durch den Benutzer zu verhindern. Der Schwenkarm wird hinter der eingeführten Karte in die Kartenbahn geschwenkt und in dieser Verriegelungsstellung arretiert. Nach Lösen der motorangetriebenen Arretierung schwenkt der Schwenkarm aus der Kartenbahn heraus, und die Karte kann vom Benutzer entnommen werden. Wenn allerdings die Arretierung defekt ist, z.B. klemmt, oder bei Stromausfall wird die Arretierung nicht gelöst, so dass der Benutzer die Karte nicht aus dem Kartenleser herausziehen kann.

Aufgabe der vorliegenden Erfindung ist es, einen Kartenleser mit möglichst wenigen und einfachen Komponenten bereit zu stellen.

Diese Aufgabe wird erfindungsgemäß gelöst durch einen Kartenleser mit einer Verriegelungsklinke, die um eine etwa parallel zur Vorder- und Hinterkante einer eingeführten Karte verlaufende Achse schwenkbar gelagert und jeweils gegen die Wirkung einer Rückstellkraft aus einer in die Kartenbahn eingreifenden Stellung beim Einführen einer Karte in Einführrichtung auf- und beim Entnehmen der Karte entgegen der Einführrichtung zurückschwenkbar ist, und mit einem um eine etwa rechtwinklig zur Kartenbahn verlaufende Achse verschwenkbaren Sperrhebel, der in seiner in die Bewegungsbahn der Verriegelungsklinke eingreifenden Sperrstellung die in die Kartenbahn eingreifende Verriegelungsklinke gegen Zurückschwenken sperrt und aus der Sperrstellung gegen die Wirkung einer Rückstellkraft in eine Freigabestellung auslenkbar ist, wobei die Verriegelungsklinke, gesehen in Aufschwenkrichtung, umfangsseitig eine erste Auflauffläche, auf welche die Kartenvorderkante beim Einführen der Karte trifft, eine zweite Auflauffläche, auf welche die Kartenhinterkante beim Entnehmen der Karte trifft, eine Drehanschlagsfläche, welche in der Sperrstellung des Sperrhebels an diesem anliegt, sowie eine sich an die Drehanschlagfläche anschließende seitliche Anlagefläche, an welcher der Sperrhebel in seiner Freigabestellung anliegt, aufweist.

Bei besonders bevorzugten Ausführungen des erfindungsgemäßen Kartenlesers verlaufen die Drehanschlagsfläche und/oder die mit der Drehanschlagsfläche zusammenwirkende Stirnfläche des Sperrhebels schräg zur Schwenkachse der Verriegelungsklinke. Diese Maßnahme hat den Vorteil, dass durch Ziehen an der verriegelten Karte der Sperrhebel aufgrund der schrägen Drehanschlagsfläche und/oder schrägen Stirnfläche aus seiner Sperrstellung in seine Freigabestellung bewegt wird und dadurch die eingeführte Karte aus dem Kartenleser gezogen werden kann. Über den Winkel der schrägen Drehanschlagsfläche bzw. Stirnfläche kann die zum Öffnen der Verriegelung erforderliche Zugkraft eingestellt werden.

Bevorzugt liegen die seitliche Anlagefläche und die beiden Auflaufflächen einander bezüglich der Schwenkachse der Verriegelungsklinke gegenüber.

Vorzugsweise sind die auf die Verriegelungsklinke und auf den Sperrhebel wirkenden Rückstellkräfte jeweils durch eine gehäuseseitig abgestützte Rückstellfeder bereitgestellt.

Zum Verschwenken des Sperrhebels aus seiner Sperrstellung in seine Freigabestellung ist bevorzugt eine Betätigungsvorrichtung in Form eines Elektromotors oder dergleichen vorgesehen.

Weitere Vorteile der Erfindung ergeben sich aus der Beschreibung und der Zeichnung. Ebenso können die vorstehend genannten und die noch weiter aufgeführten Merkmale je für sich oder zu mehreren in beliebigen Kombinationen Verwendung finden. Die gezeigte und beschriebene Ausführungsform ist nicht als abschließende Aufzählung zu verstehen, sondern hat vielmehr beispielhaften Charakter für die Schilderung der Erfindung.

In der Zeichnung ist der erfindungsgemäße Kartenleser zu verschiedenen Zeitpunkten beim Einführen und Entnehmen einer Karte im Bereich einer die eingeführte Karte verriegelnden Klinke und eines mit der Klinke zusammenwirkenden Sperrhebels in einer schematischen seitlichen Schnittansicht bzw. in einer Draufsicht dargestellt. Es zeigen:
- Fign. 1a und 1b: die Verriegelungsklinke in ihrer Ausgangsstellung und den Sperrhebel in seiner Freigabestellung;
- Fign. 2a und 2b: die geringfügig verschwenkte Verriegelungsklinke zu Beginn des Einführvorgangs der Karte und den in seine Sperrstellung verschwenkten Sperrhebel;
- Fign. 3a und 3b: die vollständig aus der Kartenbahn ausgelenkte Verriegelungsklinke und den Sperrhebel in seiner Sperrstellung;
- Fign. 4a und 4b: die Verriegelungsklinke in ihrer die eingeführte Karte hintergreifenden Verriegelungsstellung und den Sperrhebel in seiner Sperrstellung;
- Fign. 5a und 5b: die geringfügig verschwenkte Verriegelungsklinke zu Beginn des Entnahmevorgangs und den in seine Freigabestellung verschwenkten Sperrhebel; und
- Fign. 6a und 6b: die vollständig aus der Kartenbahn ausgelenkte Verriegelungsklinke und den Sperrhebel in seiner Freigabestellung;

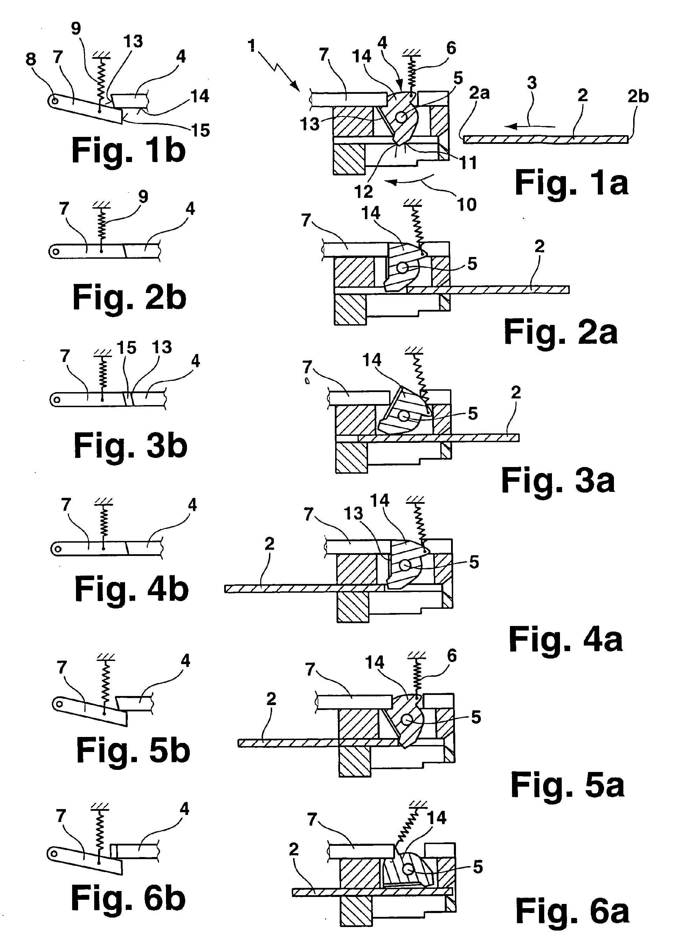

In Fig. 1a ist mit **1** ein sogenannter Push/Pull-Kartenleser bezeichnet, bei dem eine Karte **2** durch den Benutzer in Einführrichtung **3** bis zur Anlage an einen Kartenanschlag (nicht gezeigt) in ihre Datenaustauschposition in den Kartenleser 1 eingeführt und nach dem Datenaustausch vom Benutzer wieder aus dem Kartenleser 1 herausgezogen wird.

Um - z.B. während des Datenaustausches - ein Zurückziehen der eingeführten Karte durch den Benutzer zu verhindern, wird die eingeführte Karte 2 im Kartenleser 1 mittels einer Verriegelungsklinke **4** verriegelt, die um eine parallel zur Vorder- und Hinterkante **2a, 2b** einer eingeführten Karte 2 verlaufende Achse **5** schwenkbar gelagert ist. Die Klinke **4** ist jeweils gegen die Wirkung einer gehäuseseitig abgestützten Rückstellfeder **6** aus einer in die Kartenbahn eingreifenden Stellung beim Einführen einer Karte 2 in Einführrichtung 3 auf- und beim Entnehmen der Karte 2 entgegen der Einführrichtung 3 zurückschwenkbar. Mit der Klinke 4 wirkt ein Sperrhebel **7** zusammen, der um eine rechtwinklig zur Kartenbahn verlaufende Achse **8** schwenkbar gelagert ist. Der Sperrhebel 7 sperrt in seiner in die Bewegungsbahn der Klinke 4 eingreifenden Sperrstellung die in die Kartenbahn eingreifende Klinke 4 gegen Zurückschwenken und ist aus der Sperrstellung gegen die Wirkung einer gehäuseseitig abgestützten Rückstellfeder **9** in eine Freigabestellung auslenkbar. Gesehen in Aufschwenkrichtung **10**, umfasst die Klinke 4 umfangsseitig eine erste Auflauffläche **11**, auf welche die Kartenvorderkante 2a beim Einführen der Karte 2 trifft, eine zweite Auflauffläche **12**, auf welche die Kartenhinterkante 2b beim Entnehmen der Karte 2 trifft, eine Drehanschlagsfläche **13**, welche in der Sperrstellung des Sperrhebels 7 an diesem anliegt, sowie eine sich an die Drehanschlagsfläche 13 unmittelbar anschließende seitliche Anlagefläche **14**, an welcher der Sperrhebel 7 in seiner Freigabestellung anliegt. Die beiden Auflaufflächen 11, 12 und die seitliche Anlagefläche 14 liegen einander bezüglich der Schwenkachse 5 der Verriegelungsklinke 4 gegenüber. Die Drehanschlagsfläche 13 und die mit ihr zusammenwirkende Stirnfläche **15** des Sperrhebels 7 verlaufen schräg zur Schwenkachse 5 der Klinke 4.

In den Fign. 1a und 1b ist die Klinke 4 in ihrer Ausgangsstellung gezeigt, in der die Klinke 4 mit ihrer Auslauffläche 11 in die Kartenbahn eingreift und der Sperrhebel 7 gegen die Wirkung der Rückstellfeder 9 seitlich an der Anlagefläche 14 anliegt (Freigabestellung).

Beim Einführen der Karte 2 trifft die Kartenvorderkante 2a auf die Auflauffläche 11, wodurch die Klinke 4 um die Schwenkachse 5 im Uhrzeigesinn verschwenkt wird. In den Fign. 2a und 2b ist die Klinke 4 gerade so weit verschwenkt, dass der Sperrhebel 7 nicht mehr an der Anlagefläche 14 anliegt, sondern durch die Rückstellfeder 9 in seine an der Drehanschlagfläche 13 anliegende Sperrstellung gezogen ist. Beim weiteren Einführvorgang wird die Klinke 4 durch die Kartenvorderkante 2a vollständig aus der Kartenbahn ausgelenkt (Fig. 3a), so dass die Drehanschlagsfläche 13 der Klinke 4 von der Stirnfläche 15 des Sperrhebels 7 beabstandet ist (Fig. 3b). Sobald die Kartenhinterkante 2b an der Klinke 4 vorbeibewegt wird, schnappt die Klinke 4, betätigt durch die Rückholfeder 6, im Gegenuhrzeigersinn zurück (Fig. 4a), bis ihre Drehanschlagsfläche 13 an der Stirnseite 15 des Sperrhebels 7 anliegt (Fig. 4b). Die Verriegelung ist nun aktiv.

Es gibt nun drei Möglichkeiten:
1. Jemand möchte die eingeführte Karte 2 unberechtigterweise, z.B. während eines zwischen Karte 2 und Kartenleser 1 gerade stattfindenden Datenaustausches, ziehen. Die Karte 2 fährt entgegen der Einführrichtung 3 bis an die Auflauffläche 12. Diese gibt die Kraft an den Sperrhebel 7 weiter, der das Öffnen der Verriegelung, d.h. das Verschwenken der Klinke 4 im Gegenuhrzeigersinn, blockiert.
2. Nach Ende des Datenaustausches mit der Karte 2 verschwenkt eine Betätigungseinrichtung (nicht gezeigt), z.B. ein Motor, den Sperrhebel 7 in seine Freigabestellung (Fig. 5b). Dadurch verschwenkt die nun freie Klinke 4, betätigt durch die Rückstellfeder 6, im Gegenuhrzeigersinn bis in ihre Ausgangsstellung, und der Sperrhebel 7 liegt gegen die Wirkung der Rückstellfeder 9 seitlich an der Anlagefläche 14 an (Fig. 5a). Die Verriegelung der Klinke 4 im Gegenuhrzeigersinn ist nun nicht mehr aktiv, so dass die Karte 2 problemlos aus dem Kartenleser 1 gezogen werden kann. Dabei trifft die Kartenhinterkante 2b auf die Auflauffläche 12, wodurch die Klinke 4 im Gegenuhrzeigersinn verschwenkt wird, bis sie vollständig aus der Kartenbahn ausgelenkt ist (Fig. 6a). Der Sperrhebel 7 liegt weiterhin seitlich an der Anlagefläche 14 an (Fig. 6b). Sobald die Kartenvorderkante 2a an der Klinke 4 vorbeibewegt wird, schnappt die Klinke 4, betätigt durch die Rückholfeder 6, im Uhrzeigersinn zurück in ihre Ausgangsstellung (Fig. 1a). Während dieser Auslenkung der Klinke 4 im Gegenuhrzeigersinn und auch in der Ausgangsstellung der Klinke 4 liegt der Sperrhebel 7 weiterhin seitlich an der Anlagefläche 14 der Klinke 4 an (Fig. 1b).
3. Notentriegelung: Im Kartenleser 1 tritt eine Funktionsstörung, z.B. Stromausfall, auf, so dass der Sperrhebel 7 durch den Motor nicht in seine Freigabestellung bewegt werden kann. Der Kunde zieht mit einer großen Kraft an der verriegelten Karte 2. Diese drückt die Klinke 4 im Gegenuhrzeigersinn um die Schwenkachse 5 gegen den Sperrhebel 7. Durch seine schräge Stirnseite 15 wird der Sperrhebel 7 an der schrägen Drehanschlagsfläche 13 bis in seine Freigabestellung gedrückt (Fig. 5b). Dadurch verschwenkt die nun freie Klinke 4, betätigt durch die Rückstellfeder 6, im Gegenuhrzeigersinn bis in ihre Ausgangsstellung, und der Sperrhebel 7 liegt gegen die Wirkung der Rückstellfeder 9 seitlich an der Anlagefläche 14 an (Fig. 5a). Die Verriegelung der Klinke 4 im Gegenuhrzeigersinn ist nun nicht mehr aktiv, so dass die Karte 2, wie oben in 2. beschrieben, problemlos aus dem Kartenleser 1 gezogen werden kann. Je nachdem wie flach oder schräg die Drehanschlagsfläche 13 der Klinke 4 und die Stirnseite 15 des Sperrhebels 7 ausgebildet sind, kann die Notentriegelung mit mehr oder weniger Kraft aktiviert werden.

## Patentansprüche

1. Kartenleser (1) mit einer Verriegelungsklinke (4), die um eine etwa parallel zur Vorder- und Hinterkante (2a, 2b) einer eingeführten Karte (2) verlaufende Achse (5) schwenkbar gelagert und jeweils gegen die Wirkung einer Rückstellkraft aus einer in die Kartenbahn eingreifenden Stellung beim Einführen einer Karte (2) in Einführrichtung (3) auf- und beim Entnehmen der Karte (2) entgegen der Einführrichtung (3) zurückschwenkbar ist, und mit einem um eine etwa rechtwinklig zur Kartenbahn verlaufende Achse (8) verschwenkbaren Sperrhebel (7), der in seiner in die Bewegungsbahn der Verriegelungsklinke (4) eingreifenden Sperrstellung die in die Kartenbahn eingreifende Verriegelungsklinke (4) gegen Zurückschwenken sperrt und aus der Sperrstellung gegen die Wirkung einer Rückstellkraft in eine Freigabestellung auslenkbar ist, wobei die Verriegelungsklinke (4), gesehen in Aufschwenkrichtung (10), umfangsseitig eine erste Auflauffläche (11), auf welche die Kartenvorderkante (2a) beim Einführen der Karte (2) trifft, eine zweite Auflauffläche (12), auf welche die Kartenhinterkante (2b) beim Entnehmen der Karte (2) trifft, eine Drehanschlagsfläche (13), welche in der Sperrstellung des Sperrhebels (7) an diesem anliegt, sowie eine sich an die Drehanschlagsfläche (13) anschließende seitliche Anlagefläche (14), an welcher der Sperrhebel (7) in seiner Freigabestellung anliegt, aufweist.

2. Kartenleser nach Anspruch 1, **dadurch gekennzeichnet, dass** die Drehanschlagsfläche (13) und/oder die mit der Drehanschlagsfläche (13) zusammenwirkende Stirnfläche (15) des Sperrhebels (7)schräg zur Schwenkachse (5) der Verriegelungsklinke (4) verlaufen.

3. Kartenleser nach Anspruch 1 oder 2, **dadurch gekennzeichnet, dass** die seitliche Anlagefläche (14) und die beiden Auflaufflächen (11, 12) einander bezüglich der Schwenkachse (5) der Verriegelungsklinke (4) gegenüberliegen.

4. Kartenleser nach einem der vorhergehenden Ansprüche, **dadurch gekennzeichnet, dass** die Verriegelungsklinke (4) gegen die Wirkung einer Rückstellfeder (6) aus der in die Kartenbahn eingreifenden Stellung auslenkbar ist.

5. Kartenleser nach einem der vorhergehenden Ansprüche, **dadurch gekennzeichnet, dass** der Sperrhebel (7) aus seiner Sperrstellung gegen die Wirkung einer Rückstellfeder (9) in seine Freigabestellung auslenkbar ist.

6. Kartenleser nach einem der vorhergehenden Ansprüche, **gekennzeichnet durch** eine Betätigungsvorrichtung zum Verschwenken des Sperrhebels (7) aus seiner Sperrstellung in seine Freigabestellung.
